# EUROPÄISCHE PATENTANMELDUNG

(11) **EP 4 707 650 A1**
(43) Veröffentlichungstag der Anmeldung: **11.03.2026**
(21) Anmeldenummer: 24199009.2
(22) Anmeldetag: 06.09.2024
(51) Int. Cl.: F16K 31/04, F24F 13/14

(54) **STELLANTRIEB, ANORDNUNG MIT EINEM STELLANTRIEB UND MONTAGEVERFAHREN**

(71) Anmelder: Siemens Schweiz AG, 8047 Zürich (CH)
(72) Erfinder: Kamm, Bruno, 6312 Steinhausen (CH); Wattenhofer, Severin, 6344 Meierskappel (CH)
(74) Vertreter: Siemens Patent Attorneys

(57) **Zusammenfassung**

Der erfindungsgemäße Stellantrieb (1) für eine (Luft-)Klappe oder für ein Ventil zum Einstellen eines gasförmigen oder flüssigen Volumenstroms weist ein Stellelement (4) zur Aufnahme eines Betätigungsschafts der (Luft-)Klappe bzw. des Ventils auf. Weiterhin umfasst der Stellantrieb (1) eine Antriebseinrichtung zum Antreiben des Stellelements (4) um eine Stellachse (5) des Stellelements (4) sowie ein die Antriebseinrichtung und das Stellelement (4) umgebendes Gehäuse (10). Dabei weist das Stellelement (4) in Bezug zur Stellachse (5) ein erstes axiales Ende und ein gegenüberliegendes zweites axiales Ende auf, wobei zumindest ein axiales Ende des Stellelements (4) einer jeweiligen axialen Zugangsöffnung (12) im Gehäuse (10) gegenüberliegt oder aus einer solchen herausragt. Das Stellelement (4) weist hierbei eine zwischen dem ersten und dem zweiten axialen Ende verlaufende, mit der Stellachse (5) fluchtende Durchgangsöffnung (6) auf, welche an einer radialen Innenseite des Stellelements (4) zur axialen Aufnahme des Betätigungsschafts über die jeweilige Zugangsöffnung (12) durch ein Aufnahmeprofil (7) begrenzt ist. Das Gehäuse (10) und das Stellelement (4) sind dabei derart ausgestaltet, dass mittels des Stellelements (4) ein parallel zur Stellachse (5) ausgerichteter Betätigungsschaft auch radial in dem Aufnahmeprofil (7) aufnehmbar und durch das Stellelement (4) antreibbar ist. Der Stellantrieb ist dadurch flexibler einsetzbar, wobei der Montageaufwand deutlich reduziert werden kann.

## Beschreibung

Die Erfindung betrifft einen Stellantrieb für eine (Luft-)Klappe oder für ein Ventil zum Einstellen eines gasförmigen oder flüssigen Volumenstroms. Vorzugsweise ist der Stellantrieb ein Luftklappendrehantrieb. Er kommt insbesondere bei sogenannten HLK-Anwendungen für Heizung, Lüftung oder Klimatechnik zum Einsatz. Der betrachtete Stellantrieb weist ein Stellelement sowie eine in oder an einem Grundkörper des Stellantriebs aufgenommene Antriebseinheit zum Antreiben des Stellelements auf. Das Stellelement umfasst eine um eine Stellachse drehbar angeordnete Aufnahme zur mechanischen Kopplung eines Stellglieds der (Luft-)Klappe oder des Ventils.

Weiterhin betrifft die Erfindung eine Anordnung mit einem derartigen Stellantrieb sowie ein Montageverfahren des Stellantriebs an einem Gehäuse einer (Luft-)Klappe oder eines Ventils.

Bei derartigen Stellantrieben wird die Klappe oder das Ventil durch das Stellelement des Stellantriebs um eine Stellachse bewegt oder sogar zumindest teilweise durch dieses direkt gebildet. Der Stellantrieb ist oftmals dazu eingerichtet, das Stellelement von einer ersten Stellposition in eine zweite Stellposition zu bewegen. Beide Stellpositionen können üblicherweise Endanschläge bilden. Der Stellanschluss kann innerhalb eines vorgegebenen Stell- oder Drehwinkelbereichs zwischen der ersten Stellposition und der zweiten Stellposition um seine Stellachse drehbar angeordnet sein. Der maximale Stellwinkelbereich zwischen diesen beiden Stellpositionen bzw. Drehstellungen liegt typischerweise bei 90° ± 10°.

Bei der Montage des Stellantriebs an einer (Luft-)Klappe oder einem Ventil wird üblicherweise die um die Stellachse drehbare Aufnahme des Stellelements in axialer Richtung über einen Betätigungsschaft des zu koppelnden Stellglieds geführt und anschließend daran fixiert. Aus Platzgründen kann es dabei erforderlich sein, zunächst den Stellantrieb an der (Luft-)Klappe oder dem Ventil zu montieren, um diese Kombination anschließend in ihrem finalen Einbauraum zu montieren, da Insbesondere bei beengten Platzverhältnissen eine nachträgliche Montage des Stellantriebs an der (Luft-)Klappe oder dem Ventil nicht mehr möglich ist. Bei einem Wechsel des Stellantriebs kann es daher erforderlich sein, die Kombination aus Stellantrieb und (Luft-)Klappe bzw. Ventil zunächst gemeinsam zu demontieren, danach außerhalb des Einbauraums den Stellantrieb zu wechseln, um anschließend die Kombination aus neuem Stellantrieb und (Luft-)Klappe wieder im eigentlichen Einbauraum zu montieren. Mit einem solchen Wechsel des Stellantriebs sind ein hoher zeitlicher Montageaufwand - und damit hohe Montagekosten - verbunden.

Es ist daher Aufgabe der vorliegenden Erfindung, einen Stellantrieb anzugeben, welcher universeller und/oder flexibler einsetzbar ist sowie einen Stellantrieb, eine Anordnung mit einem solchen Stellantrieb und ein Montageverfahren bereitzustellen, welche sich durch einen geringeren Montageaufwand auszeichnen und geeignet sind, die voranstehend beschriebenen Nachteile zumindest teilweise zu beheben.

Die Aufgabe der Erfindung wird durch die Merkmale des Stellantriebs, der Anordnung mit einem solchen Stellantrieb sowie des Montageverfahrens gemäß den unabhängigen Ansprüchen gelöst. Vorteile und Ausgestaltungen der Erfindung, die einzeln oder in Kombination miteinander einsetzbar sind, sind Gegenstand der abhängigen Ansprüche.

Der erfindungsgemäße Stellantrieb für eine (Luft-)Klappe oder für ein Ventil zum Einstellen eines gasförmigen oder flüssigen Volumenstroms weist ein Stellelement zur Aufnahme eines Betätigungsschafts der (Luft-)Klappe bzw. des Ventils auf. Weiterhin umfasst der Stellantrieb eine Antriebseinrichtung zum Antreiben des Stellelements um eine Stellachse des Stellelements sowie ein die Antriebseinrichtung und das Stellelement umgebendes Gehäuse. Dabei weist das Stellelement in Bezug zur Stellachse ein erstes axiales Ende und ein gegenüberliegendes zweites axiales Ende auf, wobei zumindest ein axiales Ende des Stellelements einer jeweiligen axialen Zugangsöffnung im Gehäuse gegenüberliegt oder aus einer solchen herausragt. Das Stellelement weist hierbei eine zwischen dem ersten und dem zweiten axialen Ende verlaufende, mit der Stellachse fluchtende Durchgangsöffnung auf, welche an einer radialen Innenseite des Stellelements zur axialen Aufnahme des Betätigungsschafts über die jeweilige Zugangsöffnung durch ein Aufnahmeprofil begrenzt ist. Das Gehäuse und das Stellelement sind dabei derart ausgestaltet, dass mittels des Stellelements ein parallel zur Stellachse ausgerichteter Betätigungsschaft auch radial in dem Aufnahmeprofil aufnehmbar und durch das Stellelement antreibbar ist.

Der Betätigungsschaft ist mit einem Stellglied der (Luft-)Klappe bzw. des Ventils gekoppelt, sodass durch eine Drehbewegung des Betätigungsschafts eine Änderung des Volumenstroms bewirkt werden kann. Zur Realisierung dieser Drehbewegung ist der Stellantrieb an der (Luft-) Klappe oder dem Ventil montierbar, indem der Betätigungsschaft mit dem Aufnahmeprofil des Stellelements mechanisch gekoppelt wird. Die Montage des Stellantrieb an der (Luft-)Klappe oder dem Ventil wird dadurch vereinfacht, dass der Betätigungsschaft nicht in axialer Richtung in die Durchgangsöffnung des Stellelements eingeführt werden muss, sondern - insbesondere bei beengten Platzverhältnissen - auch in radialer Richtung in dem Aufnahmeprofil des Stellelements aufgenommen werden kann. Mit anderen Worten: der Stellantrieb weist an einer radialen Außenseite des Stellelements eine sich relativ zu Stellachse in radialer Richtung erstreckende, in die Durchgangsöffnung - und damit in das Aufnahmeprofil - einmündende Aufnahmeöffnung auf, so dass der Stellantrieb nicht nur von oben, d.h. in axialer Richtung, sondern auch von der Seite, d.h. in radialer Richtung, auf den Betätigungsschaft aufgesteckt werden kann.

In einer vorteilhaften Weiterbildung des Stellantriebs ist das Aufnahmeprofil zur formschlüssigen Kopplung des Betätigungsschafts ausgebildet.

Unter dem Begriff der "formschlüssigen Kopplung" des Betätigungsschafts im Aufnahmeprofil ist insbesondere ein Formschluss bei Drehung um die Stellachse zu verstehen. Der Formschluss ist dabei von der Form des Betätigungsschafts abhängig. Dieser kann beispielsweise als 4-Kant-Profil oder als 6-Kant-Profil ausgebildet sein, wobei das Aufnahmeprofil das entsprechende Gegenprofil aufweist. Der Montageaufwand wird dadurch weiter reduziert.

In einer weiteren vorteilhaften Weiterbildung weist der Stellantrieb Mittel zur kraftschlüssigen Kopplung des Betätigungsschafts auf.

Insbesondere bei Verwendung eines runden, d.h. rotationssymmetrischen Betätigungsschafts ist ein zusätzliches Befestigungsmittel zur kraftschlüssigen Kopplung, d.h. zur Klemmung des Betätigungsschafts erforderlich. Ein rotationssymmetrischer Betätigungsschaft ist beispielsweise vorteilhaft, um die Winkellage des damit verbundenen Stellglieds der (Luft-)Klappe bzw. des Ventils exakt justieren zu können. Des Weiteren ergibt sich aus der Verwendung eines runden Betätigungsschafts ein zusätzlicher Freiheitsgrad hinsichtlich der Montageposition des Stellantriebs relativ zur Stellachse.

In einer weiteren vorteilhaften Weiterbildung weist der Stellantrieb ein am Stellelement oder am Aufnahmeprofil montierbares Arretierelement zur Arretierung des Betätigungsschafts in dem Aufnahmeprofil in radialer Richtung auf.

Mit Hilfe des zusätzlichen Arretierelements wird ein Herausgleiten des Betätigungsschafts aus dem Aufnahmeprofil in radialer Richtung wirksam verhindert. Vorteilhafterweise bildet das Arretierelement in montiertem Zustand mit dem Betätigungsschaft dabei eine in der radialen Richtung wirkenden, formschlüssige Verbindung.

In einer weiteren vorteilhaften Weiterbildung des Stellantriebs ist das Stellelement als Zahnsegment ausgebildet.

Unter dem Begriff "Zahnsegment" wird ein unvollständiges Zahnrad verstanden, d.h. das Zahnrad ist ausgeschnitten und weist einen als Zahnrad ausgebildeten ersten Kreissektorabschnitt sowie einen offenen zweiten Kreissektorabschnitt auf. Zum Antreiben des Stellelements ist das Zahnsegment über den ersten Kreissektorabschnitt mit der Antriebseinrichtung mechanisch gekoppelt, während im Bereich des zweiten Kreissektorabschnitts die in die Durchgangsöffnung einmündende Aufnahmeöffnung zum radialen Aufstecken des Stellantriebs auf den Betätigungsschaft angeordnet ist. Je nach Anwendungsfall sowie je nachdem welche Antriebseinrichtung verwendet wird, kann es vorteilhaft sein, das Stellelement über ein Getriebe, vorzugsweise über ein Reduziergetriebe zur Reduzierung der Drehzahl, mit der Antriebseinrichtung zu koppeln. Ferner kann auch eine Motorsteuereinheit und/oder das Stellelement Teil der Antriebeinheit sein.

In einer weiteren vorteilhaften Weiterbildung des Stellantriebs ist das Stellelement zwischen einer ersten Endposition und einer zweiten Endposition um die Stellachse bewegbar, wobei die erste und die zweite Endposition um einen Drehwinkel von 90° zueinander versetzt angeordnet sind. Mittels der beiden Endpositionen sind dabei zwei Zustände der (Luft-)Klappe bzw. des Ventils - entweder vollständig geöffnet oder vollständig geschlossen - realisierbar.

In einer weiteren vorteilhaften Weiterbildung des Stellantriebs weist das Gehäuse an einer Unterseite ein Befestigungsmittel zur drehsicheren Befestigung des Stellantriebs an der (Luft-) Klappe bzw. dem Ventil auf.

Mit Hilfe des in montiertem Zustand an der dem Ventil oder der (Luft-)Klappe zugewandten Unterseite des Gehäuses des Stellantriebs ist eine Drehmomentabstützung realisiert, sodass ein bei Betätigung des Stellantriebs auf dessen Gehäuse wirkendes Drehmoment nicht zu einer Veränderung der Montageposition des Stellantriebs relativ zum Ventil oder der (Luft-)Klappe führt. Die Betriebssicherheit des Stellantriebs wird dadurch deutlich verbessert. Als Gehäusematerial wird für kleine Drehmomente bis 5 Nm vorzugsweise Kunststoff verwendet, während für größere Drehmomente aufgrund seiner höheren Steifigkeit vorzugsweise Stahl als Gehäusewerkstoff eingesetzt wird.

Die erfindungsgemäße Anordnung weist einen Stellantrieb der vorstehend beschriebenen Art sowie eine (Luft-)Klappe oder ein Ventil zum Einstellen eines gasförmigen oder flüssigen Volumenstroms auf, wobei ein Betätigungsschaft der (Luft-)Klappe bzw. des Ventils in dem Aufnahmeprofil des Stellantriebs aufgenommen und fixiert ist.

Die erfindungsgemäße Anordnung dient zum Einstellen eines durch die (Luft-)Klappe oder das Ventil strömenden, gasförmigen oder flüssigen Volumenstroms mit Hilfe des daran befestigten Stellantriebs. Mit dem Stellelement ist - über den Betätigungsschaft - ein Stellglied der (Luft-) Klappe bzw. des Ventils drehfest verbunden, sodass bei Drehen des Stellelements das drehbar gelagerte Stellglied der (Luft-)Klappe bzw. des Ventils betätigbar ist, um den durch den rohrförmigen Abschnitt des Gehäuses strömenden Volumenstrom variieren zu können. Hinsichtlich der prinzipiellen Vorteile der erfindungsgemäßen Anordnung wird auf die vorstehend beschriebenen Vorteile den erfindungsgemäßen Stellantrieb betreffend verwiesen.

In einer vorteilhaften Weiterbildung der Anordnung ist an einem Gehäuse der (Luft-)Klappe bzw. des Ventils ein pilzförmiger Zapfen angeordnet, welcher mit einem am Gehäuse des Stellantriebs als T-Nut ausgebildeten Befestigungsmittel derart zusammenwirkt, dass bei einem Einführen des Betätigungsschafts in das Aufnahmeprofil in radialer Richtung der pilzförmige Zapfen in die T-Nut gleitet, wodurch eine Fügeverbindung realisierbar ist.

Die Befestigung des Stellantriebs am Gehäuse der (Luft-)Klappe bzw. des Ventils dient dazu, ein in radialer Richtung, d.h. gegen Drehung um die Stellachse, wirkendes Widerlager zur Drehmomentabstützung zu bilden, um ein bei Betätigen des Stellantriebs vom Stellelement über den Betätigungsschaft auf die (Luft-)Klappe bzw. das Ventil wirkendes Drehmoment aufzunehmen. Die Ausführung dieser Befestigung über die feste, aber lösbare Fügeverbindung des pilzförmigen Zapfens mit der T-Nut hat den Vorteil, dass diese Verbindung ohne zusätzlichen Aufwand während des Aufschiebens des Stellantriebs auf den Betätigungsschaft in radialer Richtung, d.h. während des Einführens des Betätigungsschaft in das Aufnahmeprofil, erfolgt. Die am Gehäuse des Stellantriebs ausgebildete T-Nut erstreckt sich hierzu ebenfalls in radialer Richtung, so dass kein zusätzlicher Montageschritt zur Herstellung dieser Befestigung erforderlich ist.

Das erfindungsgemäße Verfahren zur Montage einer Anordnung der vorstehend beschriebenen Art weist die Schritte:
a) Bereitstellen des Stellantriebs sowie der Luftklappe bzw. des Ventils,
b) Ausrichten des Aufnahmeprofils relativ zum Betätigungsschaft,
c) Zustellen des Aufnahmeprofils in radialer Richtung, bis der Betätigungsschaft in dem Aufnahmeprofil aufgenommen ist,
auf. Unter dem Begriff "Zustellen" wird eine Zustellbewegung des Aufnahmeprofils in oben bezeichneter Richtung, d.h. in Richtung des Betätigungsschafts, verstanden. Der Stellantrieb mit dem daran ausgebildeten Aufnahmeprofil wird in radialer Richtung, d.h. seitlich, gegen den Betätigungsschaft geführt, bis dieser im Aufnahmeprofil aufgenommen ist. Durch das Zustellen des Aufnahmeprofils in radialer Richtung kann der für die Montage benötigte Platzbedarf in axialer Richtung, d.h. in Richtung der Stellachse bzw. in einer Verlängerungsrichtung des Betätigungsschafts, deutlich reduziert werden, so dass auch bei in dieser Richtung beengten Platzverhältnissen eine schnelle und einfache Montage und Demontage, beispielsweise bei einem Austausch des Stellantriebs ermöglicht wird.

In einer vorteilhaften Weiterbildung weist das Verfahren den weiteren Schritt
d) Fixieren des Gehäuses des Stellantriebs am Gehäuse der (Luft-)Klappe bzw. des Ventils durch Bilden der Fügeverbindung auf. Das Fixieren des Gehäuses des Stellantriebs am Gehäuse der (Luft-)Klappe bzw. des Ventils kann beispielsweise durch Einführen des am Gehäuse der (Luft-)Klappe bzw. des Ventils ausgebildeten pilzförmigen Zapfens in die am Gehäuse des Stellantriebs ausgebildete T-förmige Nut erfolgen. Da die Montagerichtung dieser Fügeverbindung der radialen Richtung der Zustellbewegung des Aufnahmeprofils in Richtung des Betätigungsschafts gemäß Schritt c) entspricht, erfolgt die Herstellung dieser speziellen Fügeverbindung gleichzeitig mit der Zustellbewegung. Die Montage des Stellantriebs wird dadurch weiter vereinfacht.

In einer weiteren vorteilhaften Weiterbildung weist das Verfahren den weiteren Schritt
e) Fixieren des Betätigungsschafts durch Anbringen des Arretierelements auf. Um zu verhindern, dass sich der Betätigungsschaft entgegen der Zustellbewegung wieder aus dem Aufnahmeprofil löst, wird am Stellelement oder am Aufnahmeprofil das Arretierelement, welches zur Arretierung des Betätigungsschafts im Aufnahmeprofil in radialer Richtung dient, montiert. Auf diese Weise ist ein sicherer Betrieb des an der (Luft-)Klappe oder am Ventil montierten Stellantriebs gewährleistet.

Weitere Merkmale und Merkmalskombinationen der Erfindung ergeben sich aus den Figuren und deren Beschreibungen sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind. Dabei zeigen
- FIG 1: eine schematische Darstellung eines aus dem Stand der Technik bekannten Stellantriebs für eine (Luft-)Klappe oder ein Ventil in perspektivischer Ansicht;
- FIG 2: eine schematische Darstellung des erfindungsgemäßen Stellantriebs in perspektivischer Ansicht;
- FIG 3: eine schematische Detaildarstellung des Stellelements in einer ersten Endposition;
- FIG 4: eine schematische Detaildarstellung des Stellelements in einer zweiten Endposition;
- FIG 5: eine schematische Detaildarstellung des Stellelements in mit daran befestigtem Aufnahmeprofil;
- FIG 6: eine schematische Darstellung des Stellelements in mit einem daran befestigtem Arretiermittel zur formschlüssigen Kopplung des Betätigungsschafts;
- FIG 7: eine schematische Darstellung des Stellelements in mit einem daran befestigtem alternativen Arretiermittel zur kraftschlüssigen Kopplung des Betätigungsschafts;
- FIG 8: eine schematische Darstellung des erfindungsgemäßen Stellantriebs vor der Montage an einer (Luft-)Klappe in perspektivischer Ansicht;
- FIG 9: eine schematische Darstellung des erfindungsgemäßen Stellantriebs nach erfolgter Montage an der (Luft-)Klappe in perspektivischer Ansicht.

In den verschiedenen Figuren der Zeichnung sind gleiche oder funktionsgleiche Elemente mit dem gleichen Bezugszeichen versehen. Die Beschreibung gilt für alle Zeichnungsfiguren, in denen das entsprechende Teil ebenfalls zu erkennen ist.

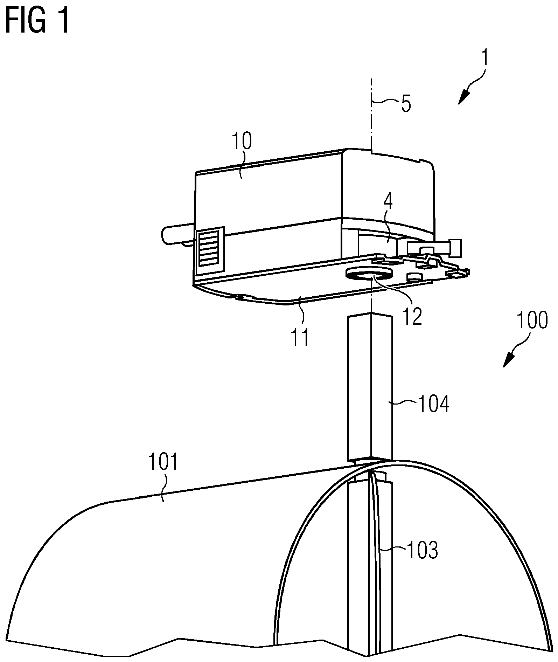

In Figur 1 ist ein aus dem Stand der Technik bekannter Stellantrieb 1' für eine (Luft-)Klappe 100 oder ein Ventil in perspektivischer Ansicht schematisch dargestellt. Die (Luft-)Klappe 100 weist einen rohrförmigen Grundkörper 101 zur Führung eines gasförmigen oder flüssigen Volumenstroms auf. Zum Einstellen des gasförmigen oder flüssigen Volumenstroms ist ein Stellglied 103 vorgesehen, welches in dem Grundkörper 101 angeordnet und drehbeweglich daran gelagert ist. Das Stellglied 103 ist über einen damit verbundenen Betätigungsschaft 104 von außen, d.h. von außerhalb des Grundkörpers 101, betätigbar.

Der Stellantrieb 1' weist einen Grundkörper auf, welcher ein Gehäuse 10 des Stellantriebs 1' bildet oder Teil dieses Gehäuses ist. In dem Gehäuse 10, das im dargestellten Fall mehrteilig ausgebildet ist, sind eine Antriebseinrichtung (nicht dargestellt) sowie ein Getriebe (nicht dargestellt), welche mit der Antriebseinrichtung mechanisch gekoppelt ist, aufgenommen und gehaltert. Zur Kopplung mit der (Luft-)Klappe 100 weist der Stellantrieb 1' abtriebsseitig ein mit dem Getriebe mechanisch gekoppeltes und um eine Stellachse 5 drehbares Stellelement 4 auf. Aufgrund der abtriebsseitig, d.h. auf Seiten des Stellelements 4, erforderlichen geringen Drehzahl ist das Getriebe üblicherweise als Reduziergetriebe ausgebildet.

Das Stellelement 4 weist - bezogen auf die Stellachse 5 - ein erstes axiales Ende sowie ein gegenüberliegend angeordnetes zweites axiales Ende auf, wobei zwischen dem ersten und dem zweiten axialen Ende eine mit der Stellachse 5 fluchtende Durchgangsöffnung ausgebildet ist, welche durch über eine an einer Unterseite 11 des Gehäuses 10 ausgebildete Zugangsöffnung 12 von außerhalb des Gehäuses 10 zugänglich ist. Die im drehbar gelagerten Stellelement 4 ausgebildete Durchgangsöffnung dient dazu, den mit dem drehbeweglich gelagerten Stellglied 103 der (Luft-)Klappe 100 gekoppelten Betätigungsschaft 104 der (Luft-)Klappe 100 formschlüssig darin aufzunehmen. Zur manuellen Betätigung des Stellelements 4 weist der Stellantrieb 1' ferner ein Handbedienelement 9 auf, welches fest mit dem Stellelement 4 gekoppelt ist und eine manuelle Betätigung des Stellelements 4 um die Stellachse 5 ermöglicht.

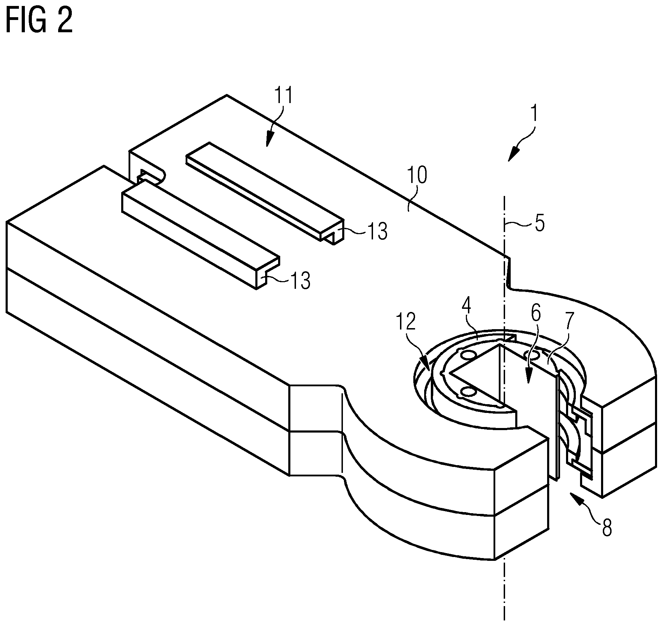

Figur 2 zeigt eine schematische Darstellung des erfindungsgemäßen Stellantriebs 1 in perspektivischer Ansicht. Der Stellantrieb 1 ist zur Kopplung mit einer (Luft-)Klappe 100 oder einem Ventil vorgesehen, um den darin fließenden gasförmigen oder flüssigen Volumenstrom einstellen zu können. Der Stellantrieb 1 weist hierzu eine Antriebseinrichtung (nicht dargestellt) sowie ein Stellelement 4 zur Aufnahme des Betätigungsschafts 104 der (Luft-)Klappe 100 bzw. des Ventils auf. Mit Hilfe der Antriebseinrichtung kann das Stellelement 4 um eine Stellachse 5 bewegt werden. Die Antriebseinrichtung sowie das Stellelement 4 sind in einem Gehäuse 10 des Stellantriebs 1 aufgenommen und gehaltert, wobei das Gehäuse 10 im Bereich des Stellelements 4, d.h. um die Stellachse 5 herum, eine obere sowie eine untere axiale Zugangsöffnung 12 aufweist, um von außerhalb des Gehäuses 10 einen Zugang für eine axiale Kopplung des Betätigungsschafts 104 mit dem Stellelement 4 zu ermöglichen.

Bezogen auf die Stellachse 5 weist das Stellelement 4 ein erstes axiales Ende sowie ein diesem gegenüberliegendes zweites axiales Ende auf. Das erste und das zweite axiale Ende des Stellelements 4 liegt dabei jeweils einer der beiden - im Gehäuse 10 ausgebildeten - axialen Zugangsöffnungen 12 gegenüber oder ragt aus diesen heraus. Zwischen dem ersten axialen Ende und dem zweiten axialen Ende verläuft eine mit der Stellachse 5 fluchtende Durchgangsöffnung 6 des Stellelements 4, in der ein Aufnahmeprofil 7 zur mechanischen Kopplung des Betätigungsschafts 104 angeordnet ist, welches die Durchgangsöffnung an einer radialen Innenseite des Stellelements begrenzt. Das Aufnahmeprofil 7 ist fest, aber lösbar mit dem Stellelement 4 verbunden und im dargestellten Fall als 4-Kant-Profil ausgebildet. Dies ist jedoch nur beispielhaft zu verstehen: zur Anpassung an die Querschnittsgeometrie des Betätigungsschafts 104 kann das Aufnahmeprofil 7 auch jede alternative geometrische Form - beispielsweise ein 6-Kant-Profil - aufweisen.

Weiterhin weist das Gehäuse 10 von der Stelleachse 5 aus betrachtet eine nach außen, d.h. in radialer Richtung verlaufende Aufnahmeöffnung 8 auf. Das Stellelement 4 sowie das Aufnahmeprofil 7 sind dabei konstruktiv derart gestaltet, dass der Betätigungsschaft 104 - sobald er parallel zur Stellachse 5 ausgerichtet ist, auch in radialer Richtung mit dem Aufnahmeprofil 7 koppelbar ist und durch das Stellelement 4 angetrieben, d.h. in eine Drehbewegung versetzt werden kann. Das Stellelement 4 mit dem Aufnahmeprofil 7 ist somit sowohl zur axialen Aufnahme des Betätigungsschafts 104, d.h. zum Einführen des Betätigungsschafts 104 in axialer Richtung in die obere oder die untere Zugangsöffnung 12, als auch zur Aufnahme des Betätigungsschafts 104 in einer hierzu orthogonalen Richtung durch Einführen des Betätigungsschafts 104 in radialer Richtung in die Aufnahmeöffnung 8, geeignet.

An einer dem Stellelement 4 abgewandten Unterseite 11 des Gehäuses 10 weist der Stellantrieb 1 zwei sich in Richtung des Stellelements 4 erstreckende Stege 13 auf, welche eine T-förmig gestaltete Nut bilden, die zur Aufnahme eines an der (Luft-)Klappe 100 bzw. dem Ventil ausgebildeten, ein entsprechend geformtes Gegenprofil aufweisendes Befestigungsmittels ausgebildet ist, um den Stellantrieb 1 sicher an der (Luft-)Klappe 100 bzw. dem Ventil zu befestigen.

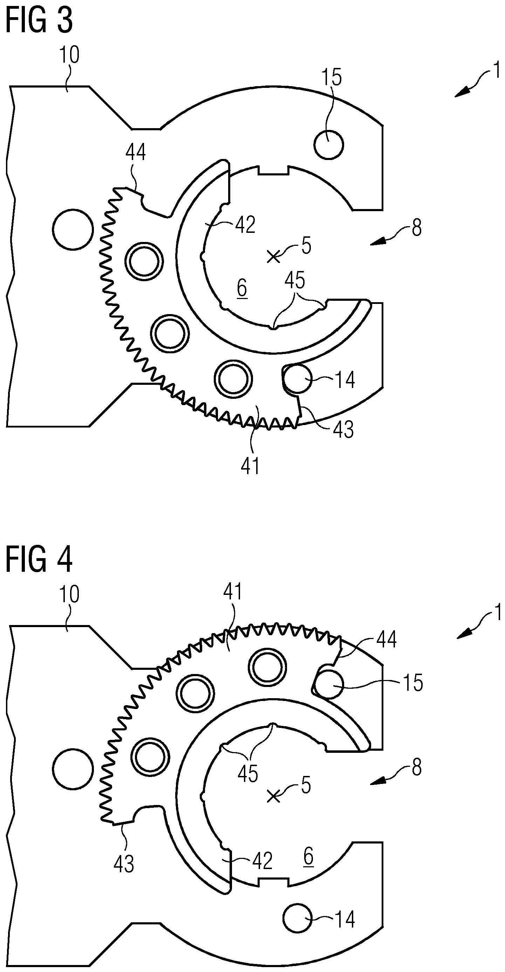

Die Figuren 3 und 4 zeigen eine schematische Detaildarstellung des Stellelements 4 in einer ersten Endposition (Figur 3) sowie in einer zweiten Endposition (Figur 4). In dem in den Figuren 3 und 4 dargestellten Ausführungsbeispiel ist das Stellelement 4 zweiteilig ausgebildet und weist ein radial nach außen gerichtetes Zahnsegment 41 sowie eine radial nach innen gerichtete Aufnahme 42 auf. Über das Zahnsegment 41 ist das Stellelement 4 mit Hilfe der Antriebseinrichtung sowie ggf. eines Reduziergetriebes antreibbar. Das Zahnsegment 41 stellt einen Kreissektorabschnitt eines Zahnrades über einen Winkelbereich von ca. 100° dar und ist über einen Winkelbereich von ca. 90° um die Stellachse 5 drehbeweglich im Gehäuse 10 gelagert. In der in Figur 3 dargestellten ersten Endposition liegt ein erstes Ende 43 des Zahnsegments 41 an einem ersten Anschlag 14, während in der in Figur 4 dargestellten zweiten Endposition liegt ein zweites Ende 44 des Zahnsegments 41 an einem zweiten Anschlag 15 an. Das Zahnsegment 41 und die Aufnahme 42 sind dabei so gestaltet, dass die Aufnahmeöffnung 8 in keiner der beiden Endpositionen durch das Zahnsegment 41 und/oder die Aufnahme 42 verdeckt ist.

Die Aufnahme 42 ist fest mit Zahnsegment 41 verbunden und an einer radialen Innenseite des Stellelements 4 zur Durchgangsöffnung 6 hin orientiert angeordnet, wobei die in Richtung der Stellachse 5 orientierte Innenfläche der Aufnahme 42 die Durchgangsöffnung des Stellelements 4 radial nach innen begrenzt. An der Innenfläche der Aufnahme 42 weist diese mehrere in Richtung der Stellachse 5 orientierte Nuten 45 auf, über die das Aufnahmeprofil 7 mit der Aufnahme 42 durch Einschieben in axialer Richtung, d.h. in Richtung der Stellachse 5, verbunden werden kann. Die Nuten 45 sind dabei in Winkelschritten von 45° an der Innenfläche der Aufnahme 42 verteilt angeordnet, sodass das Aufnahmeprofil 7 in verschiedenen Winkelstellungen in die Aufnahme 42 einsetzbar ist.

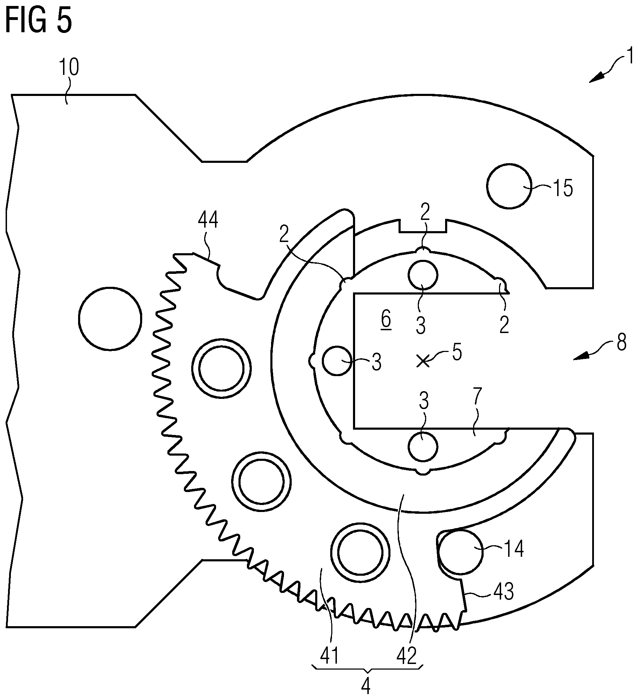

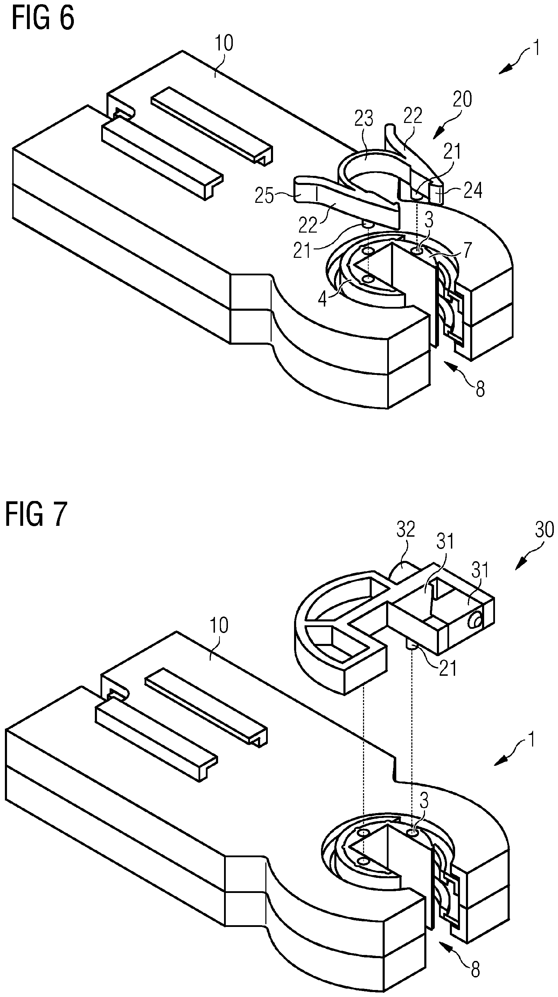

In Figur 5 ist das aus den Figuren 3 und 4 bekannte Stelleelement 4 mit dem daran befestigten, aus Figur 2 bekannten Aufnahmeprofil 7 detailliert dargestellt. Das Aufnahmeprofil 7 weist mehrere in axialer Richtung verlaufende Stege 2 auf, welche hinsichtlich ihrer Position und Geometrie mit den mehreren am Aufnahmeprofil 7 ausgebildeten Nuten 45 zusammenwirken, um bei Drehung um die Stellachse 5 eine formschlüssige Verbindung mit dem Aufnahmeprofil 7 zu bilden. Weiterhin weist das Aufnahmeprofil 7 an seiner Oberseite mehrere Bohrungen 3 auf, welche zur Aufnahme eines ersten oder zweiten Arretierelements 30, 40 (siehe Figuren 6 und 7) dienen.

In der Darstellung der Figur 5 befindet sich das Stellelement 4 in der ersten Endposition, in der das erstes Ende 43 des Zahnsegments 41 an einem ersten Anschlag 14 anliegt, so dass es durch Drehung im Uhrzeigersinn um die Stellachse 5 in die zweite Endposition bewegt werden kann. Je nach Anwendungsfall kann es erforderlich sein, dass der Betätigungsschaft 104 aufgenommen und dann im Gegenuhrzeigersinn gedreht werden muss. Dies ist mit dem erfindungsgemäßen Stellantrieb 1 ebenso möglich, indem das Stellelement zunächst in die in Figur 4 dargestellte zweite Endposition verbracht wird, und dann das Aufnahmeelement 7 mit Öffnung nach rechts in Richtung der Aufnahmeöffnung 8 in die Aufnahme 42 eingesetzt wird. In der in Figur 5 dargestellten ersten Endposition ist parallel zur Stellachse 5 ausgerichteter Betätigungsschaft 104 über die Aufnahmeöffnung 8 in radialer Richtung, d.h. im dargestellten Fall von rechts, in dem Aufnahmeprofil 7 aufnehmbar. Selbstverständlich ist es ebenso möglich, den Betätigungsschaft 104 in axialer Richtung, d.h. in Richtung der Stellachse 5, in das Aufnahmeprofil 7 einzuführen. Mit Hilfe des erfindungsgemäßen Stellantriebs 1 kann somit der Betätigungsschaft 104 sowohl in axialer Richtung, d.h. in Orientierungsrichtung der Stellachse 5, über die obere oder die untere Zugangsöffnung 12, als auch in einer hierzu orthogonalen Richtung über die Aufnahmeöffnung 8 eingeführt und mit dem Aufnahmeprofil 7 des Stellelements 4 gekoppelt werden.

Die Figuren 6 und 7 zeigen schematisch den Stellantrieb 1 mit einem ersten Arretiermittel 20 sowie alternativ mit einem zweiten Arretiermittel 30. Die beiden Arretiermittel 2 bzw. 30 dienen jeweils zur formschlüssigen Kopplung des im Aufnahmeprofil 7 aufgenommenen Betätigungsschafts 104 in radialer Richtung.

Das in Figur 6 dargestellte erste Arretiermittel 20 dient zur Arretierung eines Betätigungsschafts 104 mit 4-Kant-Profil und weist an seiner dem Stellelement 4 zugewandten Seite mehrere Zapfen 21 auf, welche im Rahmen der Montage in die im Aufnahmeprofil 7 ausgebildeten Bohrungen 3 eingesteckt werden. Das erste Arretiermittel 20 ist einstückig gebildet und weist eine klammerartige Gestalt auf, mit zwei Armen 22 sowie einen die beiden Arme verbindenden federnden Steg 23. An einem ersten distalen Ende jedes der beiden Arme 22 ist jeweils ein Rasthaken 24 ausgebildet, welcher im montierten Zustand bei Einführen des Betätigungsschafts 104 in das Aufnahmeprofil 7 zunächst von dem Betätigungsschaft 104 gegen die Federkraft des Stegs 23 auseinandergedrückt werden. Sobald der Betätigungsschaft 104 seine Endposition in dem Aufnahmeprofil 7 erreicht hat, federn die Rasthaken 24 zurück und umschließen das 4-Kant-Profil des Betätigungsschafts 104, wodurch der Betätigungsschaft 104 fixiert ist und eine Bewegung des Betätigungsschafts 104 entgegen der Montagebewegung wirksam verhindert wird. Das Lösen dieser Fixierung erfolgt durch Zusammendrücken der beiden den ersten distalen Enden gegenüberliegenden zweiten distalen Enden 25 gegen die Federkraft des Stegs 23, wodurch die beiden Rasthaken 24 auseinander gedrückt werden und den Betätigungsschaft 104 in radialer Richtung freigeben.

In Figur 7 ist ein alternatives zweite Arretiermittel 30 dargestellt, welches zur Fixierung das Betätigungsschafts 104 mit rundem Profil eingesetzt wird und ebenfalls an seiner dem Stellelement 4 zugewandten Seite mehrere Zapfen 21 aufweist, welche im Rahmen der Montage alternativ zum ersten Arretiermittel 20 in die im Aufnahmeprofil 7 ausgebildeten Bohrungen 3 eingesteckt werden. Das zweite Arretiermittel 30 weist korrespondierend zum Aufnahmeprofil 7 einen rechteckigen bzw. 4-Kant-förmigen Aufnahmeraum auf, dessen Breite durch zwei aufeinander gleitende Keile 31 einstellbar ist. Dabei ist einer der beiden Keile ist mit Hilfe einer Stellschraube 32 bewegbar, wodurch der zweite der Keile 31 gegen dem im Aufnahmeraum aufgenommenen Betätigungsschaft 104 drückt und diesen dadurch klemmt, wodurch eine kraftschlüssige Verbindung zwischen dem zweiten Arretiermittel 30 und dem Betätigungsschaft 104 gebildet ist, wodurch der Betätigungsschaft 104 wirksam fixiert ist und eine Bewegung des Betätigungsschafts 104 entgegen der Montagebewegung wirksam verhindert wird.

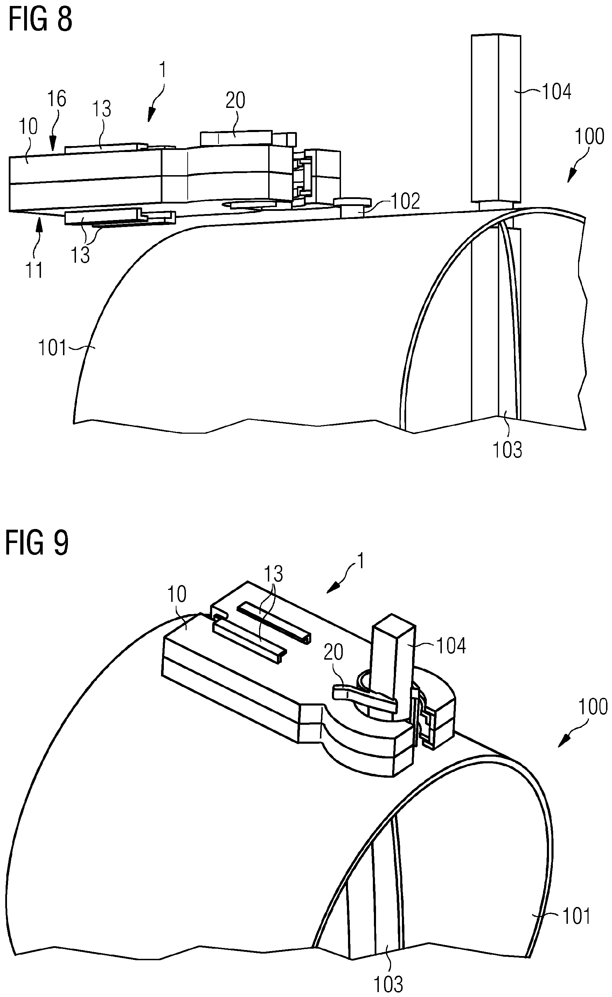

Anhand der Figuren 8 und 9, welche in perspektivischer Ansicht schematische Darstellungen des erfindungsgemäßen Stellantriebs vor der Montage (Figur 8) bzw. nach der Montage (Figur 9) an einer (Luft-)Klappe 100 zeigen, wird im Folgenden das erfindungsgemäßen Montageverfahren näher erläutert.

In einem ersten Schritt werden der erfindungsgemäße Stellantrieb 1 sowie die Luftklappe 100, wie vorstehend zu Figur 1 beschrieben, bereitgestellt. Alternativ dazu kann der Stellantrieb 1 auch an einem Ventil, beispielsweise einem Durchflussventil, montiert werden.

In einem zweiten Schritt erfolgt das Ausrichten des Aufnahmeprofils 7 des Stellantriebs 1 relativ zum zum Betätigungsschaft 104, wobei der Betätigungsschaft in radialer Richtung vor der Aufnahmeöffnung 8 des Stellantriebs 1 positioniert und parallel zur Stellachse 5 des Stellelements 4 ausgerichtet wird. Im Falle eines Betätigungsschafts 104 mit 4-Kant-Profil ist ferner darauf zu achten, dass das Profil des Betätigungsschafts 104 hinsichtlich seiner axialen Lage mit der des Aufnahmeprofils 7 kompatibel ist.

In einem dritten Schritt erfolgt eine Zustellbewegung des Aufnahmeprofils 7 in radialer Richtung, d.h. in Richtung des Betätigungsschafts 104, bis dieser in dem Aufnahmeprofil 7 aufgenommen ist. Zeitgleich mit dem dritten Schritt kann dabei das Fixieren des Gehäuses 10 des Stellantriebs 1 am Grundkörper 101 der (Luft-)Klappe 100 bzw. des Ventils erfolgen. Hierzu ist am Grundkörper 101 des Ventils 100 ein pilzförmiger Zapfen 102 ausgebildet, welcher während der Zustellbewegung des Aufnahmeprofils 7 in Richtung des Betätigungsschafts 104 in eine aus den beiden an der Unterseite 11 des Gehäuses 10 ausgebildeten Stege 13 gebildete T-förmig gestaltete Nut geschoben wird. Auf diese Weise ist eine Drehmomentabstützung des montierten Stellantriebs 1 realisiert, sodass ein bei Betätigung der Antriebseinrichtung ein auf das Gehäuse 10 wirkendes Drehmoment nicht zu einer Veränderung der Montageposition des Stellantriebs 1 relativ zur (Luft-)Klappe 100 führt.

In einem abschließenden vierten Schritt wird der im Aufnahmeprofil 7 aufgenommene Betätigungsschaft 104 durch Anbringen des Arretierelements 20, 30 fixiert, um ein unbeabsichtigtes Lösen des Betätigungsschafts 104 aus dem Aufnahmeprofil 7 des Stellelements 4 wirksam zu verhindern. Für die Erfindung ist es dabei unerheblich, ob die Befestigung des Arretierelements 20, 30 am Stellelement 4 oder am Aufnahmeprofil 7 erfolgt.

Wie der Darstellung der Figur 8 entnommen werden kann weist der erfindungsgemäße Stellantrieb 1 sowohl an seiner Unterseite 11 des Gehäuses 10 als auch an der dieser gegenüberliegenden Oberseite 16 des Gehäuses 10 Stege 13 auf, welche jeweils eine T-förmig gestaltete Nut bilden. Hieraus ergibt sich der Vorteil, dass sowohl eine Betätigung des Stellglieds 103 im Uhrzeigersinn als auch im Gegenuhrzeigersinn realisierbar ist, ohne dass das Aufnahmeprofil 7 hierzu ummontiert werden muss - der Stellantrieb 1 wird hierzu einfach umgekehrt, d.h. anstatt der Unterseite 11 weist die Oberseite 16 in Richtung der (Luft-)Klappe 100, montiert.

### Bezugszeichenliste

- 1, 1': Stellantrieb
- 2: Steg
- 3: Bohrung
- 4: Stellelement
- 5: Stellachse
- 6: Durchgangsöffnung
- 7: Aufnahmeprofil
- 8: Aufnahmeöffnung
- 9: Handbedienelement
- 10: Gehäuse
- 11: Unterseite
- 12: Zugangsöffnung
- 13: Steg
- 14: erster Anschlag
- 15: zweiter Anschlag
- 16: Oberseite

- 20: erstes Arretierelement
- 21: Zapfen
- 22: Arm
- 23: Steg
- 24: Rasthaken
- 25: zweites distales Ende

- 30: zweites Arretierelement
- 31: Keil
- 32: Stellschraube

- 41: Zahnsegment
- 42: Aufnahme
- 43: erstes Ende
- 44: zweites Ende
- 45: Nut
- 100: (Luft-)Klappe
- 101: Grundkörper
- 102: Zapfen
- 103: Stellglied
- 104: Betätigungsschaft

## Patentansprüche

1. Stellantrieb (1) für eine (Luft-)Klappe (100) oder für ein Ventil, mit einem Stellelement (4) zur Aufnahme eines Betätigungsschafts (104) der (Luft-)Klappe (100) bzw. des Ventils, wobei der Stellantrieb (1) eine Antriebseinrichtung zum Antreiben des Stellelements (4) um eine Stellachse (5) des Stellelements (4) umfasst, wobei der Stellantrieb (1) ein die Antriebseinrichtung und das Stellelement (4) umgebendes Gehäuse (10) aufweist, wobei das Stellelement (4) in Bezug zur Stellachse (5) ein erstes axiales Ende und ein gegenüberliegendes zweites axiales Ende aufweist und wobei zumindest ein axiales Ende des Stellelements (4) einer jeweiligen axialen Zugangsöffnung (12) im Gehäuse (10) gegenüberliegt oder aus einer solchen herausragt, wobei das Stellelement (4) eine zwischen dem ersten und dem zweiten axialen Ende verlaufende, mit der Stellachse (5) fluchtende Durchgangsöffnung (6) aufweist, und wobei die Durchgangsöffnung (6) durch ein Aufnahmeprofil (7) an einer radialen Innenseite des Stellelements (4) zur axialen Aufnahme des Betätigungsschafts (104) über die jeweilige Zugangsöffnung (12) begrenzt ist, **dadurch gekennzeichnet,**
**dass** das Gehäuse (10) und das Stellelement (4) derart ausgestaltet sind, dass mittels des Stellelements (4) ein parallel zur Stellachse (5) ausgerichteter Betätigungsschaft (104) auch radial in dem Aufnahmeprofil (7) aufnehmbar und durch das Stellelement (4) antreibbar ist.

2. Stellantrieb (1) nach Anspruch 1, wobei das Aufnahmeprofil (7) zur formschlüssigen Kopplung des Betätigungsschafts (104) ausgebildet ist.

3. Stellantrieb (1) nach einem der vorherigen Ansprüche, wobei der Stellantrieb (1) Mittel zur kraftschlüssigen Kopplung des Betätigungsschafts (104) aufweist.

4. Stellantrieb (1) nach einem der vorherigen Ansprüche, wobei der Stellantrieb (1) ein am Stellelement (4) oder am Aufnahmeprofil (7) montierbares Arretierelement (30, 40) zur Arretierung des Betätigungsschafts (104) in dem Aufnahmeprofil (7) in radialer Richtung aufweist.

5. Stellantrieb (1) nach einem der vorherigen Ansprüche, wobei das Stellelement (4) als Zahnsegment (41) ausgebildet ist.

6. Stellantrieb (1) nach einem der vorherigen Ansprüche, wobei das Stellelement (4) zwischen einer ersten Endposition und einer zweiten Endposition um die Stellachse (5) bewegbar ist, wobei die erste und die zweite Endposition um einen Drehwinkel von 90° ± 10° zueinander versetzt angeordnet sind.

7. Stellantrieb (1) nach einem der vorherigen Ansprüche, wobei das Gehäuse (10) an einer Unterseite 11 ein Befestigungsmittel (13) zur drehsicheren Befestigung des Stellantriebs (4) an der (Luft-)Klappe (100) bzw. dem Ventil aufweist.

8. Anordnung mit einem nach einem der Ansprüche 2 bis 7 gebildeten Stellantrieb (1) sowie mit einer (Luft-)Klappe (100) oder einem Ventil zum Einstellen eines gasförmigen oder flüssigen Volumenstroms, wobei ein Betätigungsschaft (104) der (Luft-)Klappe (100) bzw. des Ventils in dem Aufnahmeprofil (7) des Stellantriebs (4) aufgenommen und fixiert ist.

9. Anordnung nach Anspruch 8, wobei an einem Grundkörper (101) der (Luft-)Klappe (100) bzw. des Ventils ein pilzförmiger Zapfen (102) angeordnet ist, welcher mit einem am Gehäuse (10) des Stellantriebs (1) als T-Nut ausgebildeten Befestigungsmittel (13) derart zusammenwirkt, dass bei einem Einführen des Betätigungsschafts (104) in das Aufnahmeprofil (7) in radialer Richtung der pilzförmige Zapfen (102) in die T-Nut gleitet, wodurch eine Fügeverbindung realisierbar ist.

10. Verfahren zur Montage einer Anordnung nach einem der Ansprüche 8 oder 9, mit den Schritten:
a) Bereitstellen des Stellantriebs (1) sowie der Luftklappe (100) bzw. des Ventils,
b) Ausrichten des Aufnahmeprofils (7) relativ zum Betätigungsschaft (104),
c) Zustellen des Aufnahmeprofils (7) in radialer Richtung, bis der Betätigungsschaft (104) in dem Aufnahmeprofil (7) aufgenommen ist,

11. Verfahren zur Montage einer Anordnung nach Anspruch 10, mit dem weiteren Schritt:
d) Fixieren des Gehäuses (10) des Stellantriebs (1) am Grundkörper (101) der (Luft-) Klappe (100) bzw. des Ventils durch Bilden der Fügeverbindung.

12. Verfahren zur Montage einer Anordnung nach einem der Ansprüche 10 oder 11, mit dem weiteren Schritt:
e) Fixieren des Betätigungsschafts (104) durch Anbringen des Arretierelements (30, 40).
